Europäisches Patentamt

European Patent Office

Office européen des brevets

(11) Numéro de publication: **0 264 571 B1**

# FASCICULE DE BREVET EUROPEEN

(45) Date de publication de fascicule du brevet:
**10.04.91**

(51) Int. Cl.⁵: **A23L 1/2165, A23P 1/02**

(21) Numéro de dépôt: **87112011.9**

(22) Date de dépôt: **19.08.87**

(54) Agglomérats de granules de pommes de terre.

(30) Priorité: **26.09.86 FR 8613473**

(43) Date de publication de la demande:
**27.04.88 Bulletin 88/17**

(45) Mention de la délivrance du brevet:
**10.04.91 Bulletin 91/15**

(84) Etats contractants désignés:
**AT BE CH DE GB IT LI LU NL SE**

(56) Documents cités:
FR-A- 2 009 843      FR-A- 2 262 920
FR-A- 2 274 238      GB-A- 1 205 064
US-A- 3 622 355      US-A- 4 156 032

(73) Titulaire: **SOCIETE DES PRODUITS NESTLE S.A.**
**Case postale 353**
**CH-1800 Vevey(CH)**

(72) Inventeur: **De Wit, Johannes**
**3, rue Alfred de Vigny**
**F-60000 Beauvais(FR)**

## Description

La présente invention a pour objet un procédé d'agglomération de granules de pommes de terre, ainsi que les agglomérats obtenus par ce procédé.

Les purées de pommes de terre déshydratées instantanées traditionnelles sont produits généralement soit sous form de flocons soit sous forme de granules. Les flocons traditionnels obtenus par séchage sur cylindre d'une purée de pommes de terre cuites, présentent une densité apparente de environ 0,25 - 0,30 g/cm³ et peuvent être reconstitués, à savoir réhydratés avec de l'eau froide ou chaude mais pas avec de l'eau bouillante. Les granules traditionnels, obtenus par un procédé dans lequel des pommes de terre cuites découpées sont désintégrées et séchées partiellement en les mélangeant avec des granules séchés recyclés, puis séchés finalement à l'air modérément chaud, présentent une densité apparente de environ 0,9 g/cm³ et peuvent être reconstitués avec de l'eau bouillante mais difficilement avec de l'eau froide.

Les flocons traditionnels du commerce sont particulièrement destinés aux ménagères qui peuvent les reconstituer en préparant la quantité exacte de liquide chaud nécessaire et en y incorporant les flocons en remuant délicatement avec une spatule en bois p. ex. Les granules sont particulièrement destinés aux collectivités, leur reconstitution autorisant l'usage de liquide bouillant et un brassage énergique avec un fouet ou un malaxeur p. ex.

US3830943 décrit un procédé dans lequel des granules de pommes de terre sont agglomérés dans un tambour rotatif à l'aide d'un liquide contenant jusqu'à 10 % en poids de matières solides du lait pour former des agglomérats de 0,3-1,7 mm de diamètre présentant une densité apparente de 0,56 g/cm³ et formés chacun de environ 3-20 granules. Le but de ce procédé connu est de fournir un produit reconstituable dans l'eau chaude ou bouillante en remuant à la main.

FR2262920 décrit un procédé dans lequel des agglomérats de granules de pommes de terre de diamètre inférieur à environ 0,6 mm présentant une densité apparente de 0,4-0,5 g/cm³ sont agrégés à l'aide d'un liquide contenant 2,5-10 % en poids de matière solide du lait pour former des agrégats de diamètre supérieur à environ 2,4 mm présentant une densité apparente de environ 0,25-0,33 g/cm³. Le but de ce procédé connu est également de fournir un produit reconstituable dans l'eau chaude ou bouillante en remuant à la main mais qui en outre présente une densité apparente comparable à celle des flocons de pommes de terre, une telle densité ne pouvant apparemment pas être obtenue par un simple procédé d'agglomération sans résulter en une trop grande fragilité des agglomérats.

FR1519179 décrit par ailleurs un procédé dans lequel un mélange humide de 75 % de flocons et 25 % de granules de pommes de terre est préparé, malaxé, laissé reposer, remalaxé et séché pour former des sphères poreuses présentant un diamètre compris entre environ 0,2-0,8 mm et une densité apparente de environ 0,56-0,64 g/cm³. Le but de cet autre procédé connu est de fournir un produit à base de flocons de pommes de terre qui conserve les avantages des flocons sans en présenter les inconvénients, que l'on puisse notamment reconstituer aussi bien avec de l'eau froide qu'avec de l'eau bouillante tout en brassant avec un malaxeur p. ex. FR2009843 décrit la production d'agglomérats de granules de pommes de terre dont on puisse prépare une masse maléable façonnable en corps pour la friture à la française, la production des agglomérats comprenant le mélange des granules avec un peu de sel et de gomme guar, l'humidification du mélange, son extrusion, sa division en pastilles et le séchage des pastilles.

FR2274238 décrit enfin un procédé de fabrication de flocons reconstituables dans l'eau bouillante, dans lequel des protéines solubles dans l'eau et facultativement des émulsifiants sont ajoutés à une purée de pommes de terre avant son séchage sur cylindre.

La présente invention a pour but de proposer un procédé simple d'agglomération de granules de pommes de terre qui fournisse des agglomérats présentant à la fois une bonne résistance à la désintégration à l'état sec et une bonne réhydratabilité pour une densité apparente qui puiss e être aussi faible que celle des flocons traditionnels.

A cet effet, le procédé selon la présente invention est caractérisé par le fait que l'on mélange 45-55 parties en poids de granules de pommes de terre, 45-55 parties en poids d'eau et 2-3 parties en poids de matière sèche de blanc d'oeuf pour former une poudre humide granuleuse, on fait passer la poudre granuleuse à travers une grille à mailles de 3-6 mm d'ouverture, on la sèche jusqu'à une teneur en humidité résiduelle de 1-10 % pour former une poudre agglomérée sèche et l'on concasse la poudre agglomérée pour produire des agglomérats.

On a constaté avec surprise que des agglomérats de granules ainsi liés entre eux à l'aide de blanc d'oeuf présentent la reconstitution qui les distinguent radicalement aussi bien des flocons que des granules de pommes de terre traditionnels. Ces agglomérats peuvent en effet être reconstitués en les remuant avec une relativement faible quantité d'eau bouillante, de manière à obtenir une purée semblable à celle que la ménagère obtient en passant à la moulinette des pommes de terre cuites. Cette purée brute reconstituée n'est pas délicate, au contraire d'une purée de flocons reconstituée; elle peut être retravaillée ensuite en y ajoutant du lait et du beurre jusqu'à obtention de la texture légère et de la fluidité désirée, comme le fait la ménagère à partir d'une à craindre que la texture devienne collante par suite du brassage supplémentaire lors de cette phase d'ajustement de la texture ou de finition.

Les agglomérats obtenus par le présent procédé peuvent présenter une densité apparente aussi faible que celle des flocons traditionnels ou plus élevée quoiqu'inférieure à celle des granules traditionnels, selon les dimensions auxquelles ils sont réduits lors du concassage. On a constaté avec surprise que la texture de la purée obtenue par reconstitution de ces agglomérats est remarquable et présente toute la légèreté, la pulposité et l'onctuosité d'une purée préparée par la ménagère à partir de pommes de terre entières.

Pour mettre en oeuvre le présent procédé, on utilise donc comme matières premières des granules de pommes de terre, du blanc d'oeuf et de l'eau auxquels on peut ajouter p. ex.des épices telles que poudre d'oignons, poivre et muscade p. ex.

Les granules peuvent être obtenus par un procédé traditionnel, dans lequel les pommes de terre sont cuites, découpées, désintégrées et séchées partiellement en les mélangeant avec des granules séchés recyclés, puis séchées jusqu'à une teneur en humidité résiduelle de environ 3-10 %.

Les granules de même que l'eau sont donc utilisés dans le mélange à raison de 45-55 parties en poids. En d'autres termes, on mélange les granules et l'eau en quantités sensiblement égales. Si l'on augmente trop fortement la quantité d'eau par rapport à celle des granules, on augmente inutilement l'énergie dépensée pour le séchage sans améliorer sensiblement les propriétés des agglomérats. Si l'on augmente trop fortement la quantité de granules par rapport à la quantité d'eau on n'obtient plus l'effet d'agglomération.

Le blanc d'oeuf peut être utilisé sous forme fraîche ou déshydratée. Il est utilisé à raison de 2-3 parties en poids de matière sèche dans le mélange, quantité nécessaire et suffisante pour obtenir la cohésion désirée des agglomérats déshydratés et la texture remarquable des agglomérats reconstitués. On a constaté que le blanc d'oeuf jouait un rôle essentiel dans la présente invention et qu'il n'était pas possible de la remplacer par des protéines du lait ou du petit-lait p. ex. sans que les agglomérats perdent leurs propriétés exceptionnelles à la reconstitution, voire se désintègrent au séchage. On a constaté que l'on ne pouvait pas obtenir non plus des résultats satifaisants en utilisant à la place du blanc d'oeuf un mélange à parts égales de poudre de blanc d'oeuf et de poudre de petit-lait. On a constaté enfin que toute addition de matière grasse au mélange a égaleme nt pour conséquence une désintégration des agglomérats au séchage et une perte des propriétés exceptionnelles des agglomérats à la reconstitution.

Pour former ladite ·poudre humide granuleuse, on peut p. ex. prémélanger les ingrédients secs, à savoir granules, épices et poudre de blanc d'oeuf, si le blanc d'oeuf est sous cette forme, et pulvériser ensuite l'eau sur le prémélange sec tout en brassant.

On fait dons passer ensuite cette poudre granuleuse à travers une frille à mailles de 3-6 mm d'ouverture. Il est recommandé de réaliser ce passage en n'exerçant qu'un minimum de contrainte sur la poudre humide. On peut s'aider pour cela p. ex. d'une brosse rotative tournant sur la grille.

En ce qui concerne la grille elle-même, si l'on utilise une ouverture de mailles supérieure au domaine indiqué, p. ex. 8 mm, on obtient bien des agglomérats mais lesdites propriétés exceptionnelles à la reconstitution sont perdues. Si l'on utilise une ouverture de mailles inférieure au domain indiqué, 2 mm p. ex., c'est la structure des agglomérats qui est perdue car la poudre humide granuleuse est trop comprimée lors de son passage à travers de si petites mailles.

On peut sécher la poudre humide granuleuse de toute mainère propre à conserver sa structure et ses qualités organoleptiques, notamment à l'aide d'air modérément chaud. C'est ainsi qu'on forme de préférence une couche de poudre humide de 1-5 cm, de préférence 2-4 cm d'épaisseur et faire passer au travers de l'air à 50-90° C à une vitesse de environ 1-10 m/s. Pour ce mode de réalisation du séchage il est recommandé d'utiliser de l'air à une vitesse d'au moins 1 m/s afin de ne pas prolonger inutilement la durée du séchage, ce qui pourrait altérer le goût de la poudre. On peut également réaliser un préséchage de la poudre en lit fluidisé p. ex. jusqu'à une teneur en humidité de 20-30 %. Enfin, un autre mode de réalisation particulièrement approprié consiste à sécher la poudre granuleuse en étuve sous vide.

La poudre agglomérée sèche peut être concassée de toute manière propre à obtenir des agglomérats présentant les dimensions et par conséquent la densité apparente désirée. On peut par exemple obtenir un effet de concassage par un simple dispositif de transport tel qu'un système de tubes comportant une chute p. ex. Les agglomérats obtenus ainsi peuvent présenter des dimensions comprises entre environ 5-10 mm et une densité apparente de environ 0,2-0,3 g/cm$^3$ p. ex. On peut également briser délicatement la poudre agglomérée et/ou la faire passer à travers une grille. En faisant passer la poudre agglomérée à travers une grille à mailles de 7,5 mm p. ex. on peut obtenir des agglomérats qui présentent une densité apparente comprise entre 0,25 et 0,3 g/cm$^3$. On peut

utiliser une grille à mailles d'ouvertures nettement plus petites pour augmenter la densité apparente sans perdre lesdites propriétés exceptionnelles à la reconstitution des agglomérats. Avec une grille de 1 mm p. ex. on peut obtenir des agglomérats présentant une densité apparente comprise entre 0,40 et 0,45 g/cm³.

Les exemples ci-après sont présentés à titre d'illustration. Les pourcentages et parties sont données en poids.

Exemple 1

On mélange à sec durant 30 s dans un mélangeur horizontal de 20 l les ingrédients suivants:
- 3 kg de granules de pommes de terre présentant une densité apparente de environ 0,9 g/cm³ et une humidité résiduelle de 6,5-8,5 %, obtenus par un procédé dans lequel des pommes de terre Bintje sont épluchées, coupées en tranches, blanchies, refroidies et cuites, les tranches sont mélangées avec des granules recyclés et sont complètement désintégrées en cellules séparées et les granules non recyclés sont séchés à l'air à 45-50 °C.
- 150 g de blanc d'oeuf en poudre
- 17,5 g d'épices

Dans le même mélangeur, on pulvérise sur le mélange sec brassé 3 litres d'eau en 4 minutes. On prépare ainsi six charges de 6,2 kg de poudre granuleuse humide par heure dont on alimente une ligne comprenant un premier granulateur, un sécheur à air chaud à bande de transport perforée et une second granulateur.

Dans le premier granulateur, on fait passer la poudre humide granuleuse à travers une grille à mailles de 3,15 mm d'ouverture. Puis on forme une couche de 1,5 cm d'épaisseur de cette poudre humide sur la bande du sécheur qui présente une largeur de 40 cm et des perforations de 1,5 mm de diamètre. La bande passe successivement dans deux caissons où elle est traversée durant 8 min au total par de l'air ayant une vitesse de 4 m/s et une température d'entrée de 70 °C. La bande du sécheur débite ainsi 19 kg/h de poudre agglomérée sèche.

Dans le second granulateur, on fait passer la poudre agglomérée sèche à travers une grille à mailles de 7,5 mm d'ouverture. On obtient des agglomérats présentant une densité apparente de environ 0,25 g/cm³, une humidité résiduelle de 1 % et dont la plus grande partie a des dimensions comprises entre 1 et 5 mm.

Ces agglomérats se prêtent à la reconstitution selon la procédure suivante:

On porte à ébullition dans une casserole 500 ml d'eau à laquelle on a ajouté 4 g de sel et l'on coupe le feu. On verse 125 g d'agglomérats dans l'eau bouillante en remuant légèrement. On attend quelques instants puis l'on ajoute 20 g de beurre et 150-200 ml de lait et l'on mélange.

Lorque les agglomérats ont absorbé l'eau bouillante, la purée brute obtenue a l'aspect et la consistance de la purée que la ménagère obtient en passant à la moulinette des pommes de terre cuites, et elle en a également la composition, chacune contenant environ 20 % de matière sèche. La finition de la purée en ajoutant beurre et lait ensuite correspond également à la finition d'une purée ménagère.

La purée prête à consommer ainsi obtenue par reconstitution de ces agglomérats présente toute la légèreté la pulposité et l'onctuosité d'une purée ménagère. Si elle n'est pas servie tout de suite, elle peut être réchauffée dans la casserole en ajoutant un peut de lait et en remuant à la fourchette sans que sa bonne consistance soit détruite.

Exemple 2

On procède de la manière décrite à l'exemple 1, à l'exception du fait que dans le second granulateur on fait passer la poudre humide à travers une grille à mailles de 1 mm d'ouverture. On obtient des agglomérats qui présentent une densité apparente de 0,42 g/cm³ mais dont les propriétés à la reconstitution sont semblables à celles des agglomérats de l'exemple 1.

Exemple 3

Par un brassage de 2 min dans un mélangeur horizontal, on prépare 30 kg de mélange sec de granules de pommes de terre, de poudre de blanc d'oeuf et d'épices, dans les proportions décrites à l'exemple 1.

Dans le mélangeur, on pulvérise ensuite de l'eau sur le mélange sec tout en brassant jusqu'à ce que le poids de la charge soit doublé. On obtient en 3 min 600 kg de poudre humide granuleuse que l'on fait passer à travers une grille à mailles de 6 mm d'ouverture à raison de 4,5 kg/min.

On présèche la poudre humide dans un sécheur à lit fluidisé durant 5-10 min avec de l'air à 80 °C, jusqu'à une teneur en humidité résiduelle de environ 25 %. On forme une couche de la poudre préséchée de 3 cm d'épaisseur sur la bande perforée d'un sécheur à air chaud. La bande passe en 1, 5-2 h dans 3 caissons de séchage successifs où elle est traversée par de l'air ayant une vitesse de 3 m/s et des températures d'entrée respectives de 60, 70 et 80 °C./ La bande débite environ 120 kg/h de poudre agglomérée sèche qui est transportée à un poste de remplissage par l'intermediaire d'un dispositif de transport à tubes comportant une chute. La poudre agglomérée est concassée au cours de ce transport et se présente au remplissage sous forme d'agglomérats de couleur homogène jaune doré de dimensions moyennes comprises entre 3 et 5 mm.

Ces agglomérats présentent une densité apparente de 0,28 g/cm³, une humidité résiduelle de environ 1-2 % et des propriétés à la reconstitution semblables à celles des agglomérats de l'exemple 1.

Exemple 4

On procède de la manière décrite à l'exemple 1, à l'exception du fait que l'on sèche la poudre humide granuleuse disposée en couche de 4 cm d'épaisseur en étuve, sous une pression de 0,1 bar à 80° C durant 3 h.

On obtient des agglomérats présentant une humidité résiduelle de 4% qui sont sinon en tous points semblables à ceux de l'exemple 1.

Revendications

1. Procédé d'agglomération de granules de pommes de terre, caractérisé par le fait que l'on mélange 45-55 parties en poids desdits granules, 45-55 parties en poids d'eau et 2-3 parties en poids de matière sèche de blanc d'oeuf pour former une poudre humide granuleuse, on fait passer la poudre granuleuse à travers une grille à mailles de 3-6 mm d'ouverture, on la sèche jusqu'à une teneur en humidité résiduelle de 1-10 % pour former une poudre agglomérée sèche et l'on concasse la poudre agglomérée pour produire des agglomérats.

2. Procédé selon la revendication 1, caractérisé par le fait que pour sécher ladite poudre humide granuleuse, on en forme une couche de 1-5 cm d'épaisseur et l'on fait passer à travers la couche de l'air à 50-90° C à une vitesse de 1-10 m/s.

3. Procédé selon la revendication 1, caractérisé par le fait que l'on présèche ladite poudre humide granuleuse en lit fluidisé jusqu'à une teneur en humidité de 20-30 %.

4. Procédé selon la revendication 1, caractérisé par le fait que l'on sèche ladite poudre humide granuleuse en étuve sous vide.

5. Agglomérats susceptible d'être obtenus par le procédé selon la revendication 1.

## Claims

1. A process for the agglomeration of potato granules, characterized in that 45-55 parts by weight potato granules, 45-55 parts by weight water and 2-3 parts by weight egg white solids are mixed to form a moist granular powder, the moist granular powder is passed through a 3-6 mm mesh sieve, dried to a residual moisture content of 1-10% to form a dry agglomerated powder and the agglomerated powder obtained is crushed to produce agglomerates.

2. A process as claimed in claim 1, characterized in that, to dry the moist granular powder, a 1-5 cm thick layer thereof is formed and air at 50-90° C is passed through the layer at a speed of 1-10 m/s.

3. A process as claimed in claim 1, characterized in that the moist granular powder is predried in a fluidized bed to a moisture content of 20-30%.

4. A process as claimed in claim 1, wherein the moist granular powder is dried in vacuo in an oven.

5. Agglomerates obtainable by the process claimed in any preceding claim.

## Ansprüche

1. Verfahren zum Agglomerieren von Kartoffelkörnchen, dadurch gekennzeichnet, daß man 45 bis 55 Gew.-Teile der Körnchen, 45 bis 55 Gew.-Teile Wasser und 2 bis 3 Gew.-Teile an Eiweiß, bezogen auf die Trockensubstanz, unter Bildung eines feuchten, körnigen Pulvers vermischt, daß man das körnige Pulver durch ein Manchensieb Mit einer lichten Maschenweite von 3 - 6 mm hindurchführt daß man das Pulver unter Bildung eines trockenen, agglomerierten Pulvers bis auf einen Gehalt an Restfeuchtigkeit von 1 bis 10 % trocknet, und daß man das agglomerierte Pulver zur Erzeugung von Agglomeraten zerkleinert.

2. Verfahren nach Anspruch 1, dadurch gekennzeichnet, daß man zum Trocknen des feuchten körnigen Pulvers daraus eine 1 bis 5 cm dicke Schicht ausbildet, und daß man durch diese Schicht Luft von 50 bis 90°C mit einer Ge-

schwindigkeit von 1 bis 10 m/s hindurchführt.

3. Verfahren nach Anspruch 1, dadurch gekennzeichnet, daß man das feuchte, körnige Pulver in einem Fließbett bis auf einen Feuchtigkeitsgehalt von 20 bis 30% vortrocknet.

4. Verfahren nach Anspruch 1, dadurch gekennzeichnet, daß man das feuchte, körnige Pulver in einem Trockenofen unter Vakuum trocknet.

5. Agglomerate, welche nach dem Verfahren nach Anspruch 1 erhalten werden können.